(19)

Europäisches
Patentamt
European
Patent Office
Office européen
des brevets

(11) **EP 4 772 330 A1**

(12) **EUROPEAN PATENT APPLICATION**
published in accordance with Art. 153(4) EPC

(43) Date of publication:
**08.07.2026  Bulletin 2026/28**

(21) Application number: **24910931.5**

(22) Date of filing: **19.12.2024**

(51) International Patent Classification (IPC):
*B29C 64/112* (2017.01)

(52) Cooperative Patent Classification (CPC):
**B29C 64/112; B29C 64/393; B33Y 50/02;
G06F 3/12; G06N 3/126; G06T 5/92; G06T 7/90;
G06T 19/20**

(86) International application number:
**PCT/CN2024/140660**

(87) International publication number:
**WO 2025/140002 (03.07.2025 Gazette 2025/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.12.2023  CN 202311848768**

(71) Applicant: **Zhejiang Flashforge 3D Technology
Co., Ltd.
Jinhua, Zhejiang 321016 (CN)**

(72) Inventors:
• **XING, Shihai
Jinhua, Zhejiang 321016 (CN)**

• **HE, Fuchang
Jinhua, Zhejiang 321016 (CN)**
• **QI, Yangting
Jinhua, Zhejiang 321016 (CN)**
• **LIN, Naiyuan
Jinhua, Zhejiang 321016 (CN)**
• **WU, Hengxu
Jinhua, Zhejiang 321016 (CN)**
• **WEI, Yingqian
Jinhua, Zhejiang 321016 (CN)**

(74) Representative: **Buzzi, Notaro & Antonielli d'Oulx
S.p.A.
Corso Vittorio Emanuele II, 6
10123 Torino (IT)**

(54) **ERROR DIFFUSION METHOD FOR FULL-COLOR 3D PRINTING**

(57)     Provided is an error diffusion method for full-color 3D printing. The method includes: selecting a corresponding diffusion factor for each grayscale value or part of grayscale values; calculating, through a genetic iterative algorithm and according to a principle of minimum color difference, an optimal weight value corresponding to the diffusion factor for each grayscale value or each of the part of the grayscale values and an optimal binarization threshold corresponding to the diffusion factor for each grayscale value or each of the part of the grayscale values; selecting one channel for each voxel, and comparing a grayscale value of the selected channel with a corresponding optimal binarization threshold to perform binarization-based halftoning; calculating a diffusion coefficient according to the corresponding diffusion factor and the optimal weight value; and diffusing an error to unprocessed adjacent voxels in a current layer and a next layer of a current voxel. Diffusion factors are selected according to the characteristics of 3D printing.

The optimal diffusion factor weight and the optimal binarization threshold are selected through the genetic iterative algorithm. 3D error diffusion is then performed based on the obtained results. As a result, the 3D printed model achieves high color fidelity and clear texture details.

**FIG. 3**

EP 4 772 330 A1

**Description**

TECHNICAL FIELD

The present invention belongs to the field of 3D printing, and in particular, to an error diffusion method for full-color 3D printing.

BACKGROUND

With the development of 3D technology, reproducing rich colors of a model has become a new development trend in 3D printing. Currently, full-color 3D printing mostly adopts colorant subtractive color methods similar to those used in 2D printing, to achieve color reproduction through printing channels of cyan (C), magenta (M), yellow (Y), black (K), or other color-forming channels. However, unlike 2D printing, which involves only one plane, color reproduction in 3D printing is significantly more complex, as it requires color reproduction across the entire surface of the model. When traditional 2D error diffusion methods (such as the Floyd error diffusion algorithm) are directly applied to 3D printing, the color reproduction performance is poor due to failure to consider the Z-direction, which is mainly manifested in uneven distribution, accumulation, and poor detail rendering. Therefore, it is necessary to improve the 2D error diffusion algorithm and extend it to 3D.

In full-color 3D printing, the entire printing process can be divided into the following steps: 1. importing a 3D model; 2. slicing the 3D model to obtain 2D voxelized data; 3. applying color to the 2D voxel data to obtain RGB data; 4. performing color separation on the 2D RGB data to convert them into printing channel data (such as CMYK); 5. performing halftoning on the printing channel data (such as CMYK) to obtain print data; 6. outputting the print data to a printer for printing. How to perform halftoning in step 5 to obtain the print data is key to the printing quality. The halftoning methods adopted by full-color 3D printers currently available on the market vary, and the printing results are generally unsatisfactory, with color fidelity and texture details requiring improvement.

SUMMARY

An object of the present invention is to provide an error diffusion method for full-color 3D printing, so as to achieve rich colors in printed results and ensure high color fidelity and clear texture details of a 3D model.

An error diffusion method for full-color 3D printing includes the steps below.

A corresponding diffusion factor is selected for each grayscale value or part of grayscale values, and an optimal weight value corresponding to the diffusion factor for each grayscale value or each of the part of the grayscale values and an optimal binarization threshold corresponding to the diffusion factor for each grayscale value or each of the part of the grayscale values are calculated through a genetic iterative algorithm and according to the principle of minimum color difference.

One channel is selected for each voxel, a grayscale value of the selected channel is compared with a corresponding optimal binarization threshold to perform binarization-based halftoning, a diffusion coefficient is calculated according to the corresponding diffusion factor and the optimal weight value, and then an error is diffused to unprocessed adjacent voxels in the current layer and the next layer of the current voxel.

Further, the diffusion factor includes a voxel position factor, a surface voxel factor, an error count factor, a color difference factor, and a factor value of each of the voxel position factor, the surface voxel factor, the error count factor, the color difference factor, and the printing layer position factor is in a range of [0, 1].

Further, the method for determining the factor value of the voxel position factor includes the following: The voxel position factor is determined based on eight surrounding voxels in a current layer where a voxel is located and nine voxels in a next layer corresponding to the voxel, where a surrounding voxel closer to the voxel has a greater value of the voxel position factor.

Further, the method for determining the factor value of the surface voxel factor includes the following: A voxel is determined to be a surface voxel with a surface distance of 0 when one of four adjacent voxels in up, down, left, and right directions of the voxel is empty; A non-surface valid voxel adjacent to the surface voxels is regarded as an internal voxel; A breadth-first search is performed with the surface voxel as a seed to obtain first-level internal voxels with a surface distance of 1; The process is repeated until all voxels are searched or a maximum surface distance is reached; According to an absolute value of a difference in surface distance between the current voxel and an adjacent voxel, the factor value of the surface voxel factor in the current layer is determined to be smaller with a greater absolute value, where the factor value of the surface voxel factor in the next layer is less than the factor value of the surface voxel factor in the current layer.

Further, the method for determining the factor value of the error count factor includes the following: The number of diffusions when a voxel is subjected to multiple diffusions is counted, where the factor value of the error count factor decreases as the number of diffusions increases.

Further, the method for determining the factor value of the color difference factor includes the following: The factor value of the color difference factor is determined to be greater for an adjacent voxel that receives diffusion and has a smaller color difference from the current voxel during diffusion; The factor value of the color difference factor is determined to be smaller for the adjacent voxel that receives diffusion and has a greater color difference from the current voxel; The factor value of the color difference factor is calculated as $(255 - |\Delta Color|)/255$, where $\Delta Color$ is a color difference of each channel.

Further, the method for determining the printing layer position factor includes the following: Different degrees of receiving diffusion are set for the current layer and the next layer, where the printing layer position factor of the current layer is greater than the printing layer position factor of the next layer.

Further, the method for determining the binarization threshold includes the following: Binarization processing is performed on colors during a diffusion process to convert the colors into print head data; Different binarization thresholds for different color grayscales are set to produce different effects; A binarization threshold of the binarization thresholds is set as $220 + Rnd(-20\ to\ 20)$, where Rnd represents a random value, and the binarization threshold is a random value between 200 and 240.

Further, the genetic iterative algorithm includes the steps below.

All populations are initialized and, for each grayscale value or each of the part of the grayscale value, a weight value of the diffusion factor and a binarization threshold of the diffusion factor are randomly set.

Corresponding print data are calculated using a 3D error diffusion method, and a color difference is calculated using a standard color difference formula.

A solution with a smaller color difference is stored as a better solution according to the color difference.

Random crossover and exchange are performed on the weights of different factors and binarization thresholds.

One or several weights or binarization thresholds of the different factors are randomly changed.

The number of iterations is increased, and the preceding steps of the genetic iterative algorithm are repeated until a preset number of iterations is reached to obtain the optimal weight value and the optimal binarization threshold.

The preceding process is repeated for each grayscale value or repeated for part of grayscale values, and remaining grayscale values are calculated through linear interpolation or other methods.

Further, 3D error diffusion includes the steps below.

Color channel selection: For the each voxel having CMYK color values, the CMYK values of color channel data are sorted in descending order, and the following method is performed: When only one maximum value among the CMYK values exists, the channel corresponding to the maximum value is selected, and when multiple identical maximum values among the CMYK values exist, the channel corresponding to one of the identical maximum values is randomly selected.

Binarization: The optimal binarization threshold is obtained according to the grayscale value of the selected channel, the grayscale value of the selected channel is compared with the optimal binarization threshold, and when the grayscale value of the selected channel is greater than the optimal binarization threshold, the channel is set for jetting a corresponding color, or otherwise, the channel is set for jetting filling material.

Error calculation: In a case where the current voxel is determined for jetting color, the error is set as a grayscale value of the voxel in a channel minus 255, and errors for other channels are set as grayscale values of voxels in other channels; In a case where the current voxel is determined for jetting filling material, the error is set as the grayscale value of the voxel in the channel.

3D diffusion: For each of the unprocessed adjacent voxels $V_i$ in the current layer and the next layer of the current voxel, a respective diffusion coefficient $f_i$ is calculated, where $f_i = W_i / \Sigma W_i$, and $W_i$ is the sum of products of each diffusion factor and the corresponding optimal weight. An error value is added to each of CMYK colors for each of the unprocessed adjacent voxels $V_i$ as follows: $C' = C + \Delta C \times f_i$, $M' = M + \Delta M \times f_i$, $Y' = Y + \Delta Y \times f_i$, and $K' = K + \Delta K \times f_i$.

C' is a grayscale value of channel C after adding the error value, C is a current grayscale value of channel C, $\Delta C$ is an error of channel C, M' is a grayscale value of channel M after adding the error value, M is a current grayscale value of channel M, $\Delta M$ is an error of channel M, Y' is a grayscale value of channel Y after adding the error value, Y is a current grayscale value of channel Y, $\Delta Y$ is an error of channel Y, K' is a grayscale value of channel K after adding the error value, K is a current grayscale value of channel K, and $\Delta K$ is an error of channel K.

Diffusion path: After the error value is added to each of the unprocessed adjacent voxels $V_i$, color channel selection is performed on the current voxel, the error is diffused according to different diffusion paths, and the preceding operations are repeated until binarization is completed for all voxels.

Due to the adoption of the preceding technical solution, the present invention provides the advantageous effects below.

1. Diffusion factors are selected according to characteristics of 3D printing, optimal diffusion factor weights and binarization thresholds are determined through a genetic iterative algorithm, and 3D error diffusion is then performed based on the obtained results, thereby achieving high color fidelity and clear texture details in the resulting 3D printed model.

2. Color effects in 3D printing are influenced by multiple factors such as surface layer color, internal layer color, color differences between adjacent voxels, printing layer position, and color threshold. The setting of diffusion factors and binarization thresholds takes these influences and their relative importance into account, and the genetic iterative algorithm seeks an optimal solution to the greatest extent possible, thereby ensuring the optimal color reproduction effect.

BRIEF DESCRIPTION OF DRAWINGS

The present invention is further described below with reference to the accompanying drawings.

FIG. 1 exemplarily shows a monochromatic image in RGB format according to embodiment one.

FIG. 2 illustrates voxels in the current layer and the next layer.

FIG. 3 shows the result after diffusion of the image illustrated in FIG. 1.

FIG. 4 exemplarily shows a multi-color image in RGB format according to embodiment two.

FIG. 5 shows the result after diffusion of the image illustrated in FIG. 4.

FIG. 6 exemplarily shows a multi-color image in RGB format according to embodiment three.

FIG. 7 shows the result after diffusion of the image illustrated in FIG. 5.

DETAILED DESCRIPTION

In full-color 3D printing, the entire printing process may be divided into the steps below.

1. A 3D model is imported.

2. The 3D model is sliced to obtain 2D voxelized data.

3. The 2D voxel data is colored to obtain RGB data.

4. The colors of the 2D RGB data are separated to convert them into printing channel data (such as CMYK).

5. Halftoning is performed on the printing channel data (such as CMYK) to obtain print data.

6. The print data is output to a printer for printing.

Steps 1 to 4 and step 6 belong to the prior art and are not repeated herein. The present invention mainly improves step 5, namely, the manner of performing halftoning on printing channel data (such as CMYK) to obtain print data, by adopting an error diffusion method for full-color 3D printing. The method includes steps below.

1. Calculation of error diffusion coefficients

1.1 In 2D error diffusion, relatively mature diffusion coefficients already exist, but it is difficult to directly apply these coefficients in three dimensions. In 3D printing, model color is usually determined by surface voxels, so during diffusion, the method preferably diffuses errors toward the surface, and adjacent voxels preferably diffuse errors toward voxels with similar colors. To this end, for each grayscale value corresponding to a voxel, a voxel position factor, a surface voxel factor, an error count factor, a color difference factor, a printing layer position factor, and a binarization threshold are introduced. The calculation methods for the preceding factor values are as follows.

1.1.1 Factor value of the voxel position factor

The voxel position factor is determined based on eight surrounding voxels in the current layer where the voxel is located and nine voxels in the next layer corresponding to the voxel. For example, the factor values may be set as follows.
The factor value posFactor0 of the voxel position factor for the current layer is represented as:

$$posFactor0 = \begin{Bmatrix} 0.5 & 1 & 0.5 \\ 1 & 0 & 1 \\ 0.5 & 1 & 0.5 \end{Bmatrix}.$$

The factor value posFactor1 of the voxel position factor for the next layer is represented as:

$$posFactor1 = \begin{Bmatrix} 0.2 & 0.5 & 0.2 \\ 0.5 & 1 & 0.5 \\ 0.2 & 0.5 & 0.2 \end{Bmatrix}.$$

The factor value of the voxel position factor for a voxel where the voxel is located is defined as 0. Factor values of the voxel position factors for the corresponding voxels directly in front of, behind, to the left of, to the right of, and directly above the voxel are defined as a value within a range of 0.9 to 1, for example, 1. Factor values of the voxel position factors of the remaining voxels in the current layer are defined as a value within a range of 0.3 to 0.7, for example, 0.5. In the next layer, voxels whose positions are directly in front of, behind, to the left of, and to the right of the voxel having a factor value of the voxel position factor of 1 are defined as a value within a range of 0.3 to 0.7, for example, 0.5, and the remaining voxels are defined as a value within a range of 0.1 to 0.5, for example, 0.2. The closer a voxel is to the voxel, the larger the factor value of the voxel position factor.

Specific numerical values here may also be adjusted according to actual conditions. The next layer refers to the layer following the current layer in the printing order. Since 3D printing is performed layer by layer, the next layer is located above the current layer along the Z-axis.

### 1.1.2 Factor value of the surface voxel factor

When one of the four adjacent voxels directly in front of, behind, to the left of, and to the right of the voxel is empty, the voxel is defined as a surface voxel with a surface distance of 0. A non-surface valid voxel adjacent to a surface voxel is an internal voxel. A breadth-first search is performed with the surface voxel as a seed to obtain first-level internal voxels with a surface distance of 1. The process of performing the breadth-first search with the first-level internal voxels as seeds is repeated iteratively to obtain second-level internal voxels with a surface distance of 2, and so on, until all voxels are searched or the maximum surface distance is reached. The maximum distance is usually set from 20 to 30, determined empirically based on color transparency. According to the absolute value of the difference in surface distance between the current voxel and an adjacent voxel, diffusion is classified into four types, that is, surface-to-surface, internal-to-surface, surface-to-internal, and internal-to-internal. Surface-to-surface refers to diffusion from a surface voxel to another surface voxel, internal-to-surface refers to diffusion from an internal voxel to a surface voxel, surface-to-internal refers to diffusion from a surface voxel to an internal voxel, and internal-to-internal refers to diffusion from an internal voxel to another internal voxel. The corresponding difference values of surface-to-surface, internal-to-surface, surface-to-internal, and internal-to-internal are 0, 1, 2, and 3, respectively, and their factor values of the surface voxel factors are set as follows.

The factor value DisFactor0 of the surface voxel factor for the current layer is represented as: DisFactor0 = {1, 0.5, 0.25, 0.15}.

The factor value DisFactor1 of the surface voxel factor for the next layer is represented as: DisFactor1 = {0.8, 0.4, 0.15, 0.05}. For example, when the difference is 0, the factor value of the surface voxel factor for the current layer is 1, and the factor value of the surface voxel factor for the next layer is 0.8. When the difference is 1, the factor value of the surface voxel factor for the current layer is 0.5, and the factor value of the surface voxel factor for the next layer is 0.4. The larger the difference, the larger the difference in surface distance, resulting in a smaller factor value of the surface voxel factor for the current layer and an even smaller factor value of the surface voxel factor for the next layer. Specific numerical values here may also be adjusted according to actual conditions.

### 1.1.3 The factor value of the error count factor

When a voxel is subjected to multiple diffusions, the number of diffusions is counted. The factor value of the error count factor decreases as the number of diffusions increases. When the number of diffusions is 1, 2, 3, 4, and 5, the corresponding factor value errorFactor of the error count factor is represented as: errorFactor = {0.3, 0.25, 0.2, 0.15, 0.1}. Beyond 5 times, no further diffusion is accepted; that is, the factor value of the error count factor is 0. Specific numerical values here may also be adjusted according to actual conditions.

### 1.1.4 The factor value of the color difference factor

During diffusion, the factor value of the color difference factor is determined to be greater for an adjacent voxel that receives diffusion and has a smaller color difference from the current voxel, and the factor value of the color difference factor is determined to be smaller for the adjacent voxel that receives diffusion and has a greater color difference from the current voxel. The factor value colorFactor of the color difference factor is calculated as: colorFactor = (255 - |ΔColor|) / 255, where ΔColor is the color difference of each channel.

1.1.5 The factor value of the printing layer position factor

During diffusion, for adjacent voxels located in the current layer and adjacent voxels in the next printing layer, different degrees of receiving diffusion are set for the current layer and the next layer. In principle, the current layer receives more diffusion while the next layer receives less. The factor value of the printing layer position factor for the current layer is greater than the factor value of the printing layer position factor for the next layer. The factor value layerFactor[2] of the printing layer position factor for the current layer and the factor value layerFactor[2] of the printing layer position factor for the next layer may be set as {0.7, 0.5} and {0.6, 0.2}, respectively, or the like.

1.1.6 Binarization threshold

During the diffusion process, binarization processing is performed on colors to convert the colors into print head data, and different binarization thresholds are set for different color grayscales to produce different effects. The binarization threshold is set as 220 + Rnd(-20 to 20). Rnd is a random value, and the binarization threshold is a random value between 200 and 240.

1.2 After the factors are determined, the optimal weight value for each factor corresponding to each grayscale value and the optimal binarization threshold for each factor corresponding to each grayscale value are calculated through a genetic iterative algorithm and according to the principle of minimum color difference. A table may be established for inquiry to avoid repeated calculations in the future.

1.2.1 Populations are initialized, and multiple groups (over 50 groups) of weights and binarization thresholds corresponding to each diffusion factor are randomly set, within a range of 0 to 500. For example, for grayscale 64, 100 groups of weight populations are initialized, as described in Table 1. The weight for the position factor, the weight for the surface factor, the weight for the diffusion count, the weight for the color difference factor, the weight for the printing layer factor, and the value of the binarization threshold for Group No. 1 are set as 173, 32, 31, 267, 17, and 210, respectively.

Table 1

| Group No. | Weight for Position Factor | Weight for Surface Factor | Weight for Diffusion Count | Weight for Color Difference Factor | Weight for Printing Layer Factor | Binarization Threshold |
|---|---|---|---|---|---|---|
| 1 | 173 | 32 | 31 | 267 | 17 | 210 |
| 2 | 228 | 47 | 67 | 363 | 71 | 210 |
| 3 | 240 | 82 | 21 | 236 | 23 | 211 |
| 4 | 166 | 53 | 56 | 208 | 59 | 213 |
| 5 | 187 | 25 | 32 | 382 | 53 | 207 |
| 6 | 163 | 41 | 45 | 218 | 83 | 212 |
| 7 | 296 | 18 | 20 | 238 | 70 | 221 |
| 8 | 110 | 23 | 77 | 344 | 44 | 201 |
| 9 | 194 | 26 | 33 | 267 | 74 | 215 |
| 10 | 243 | 39 | 73 | 210 | 66 | 207 |
| 11 | 157 | 70 | 42 | 284 | 20 | 223 |
| 12 | 256 | 71 | 72 | 387 | 11 | 220 |
| 13 | 256 | 64 | 31 | 361 | 45 | 203 |
| 14 | 251 | 12 | 72 | 276 | 85 | 200 |
| 15 | 283 | 66 | 18 | 359 | 97 | 212 |
| 16 | 212 | 81 | 58 | 214 | 44 | 215 |
| 17 | 232 | 29 | 23 | 397 | 79 | 204 |

(continued)

| Group No. | Weight for Position Factor | Weight for Surface Factor | Weight for Diffusion Count | Weight for Color Difference Factor | Weight for Printing Layer Factor | Binarization Threshold |
|---|---|---|---|---|---|---|
| 18 | 163 | 58 | 45 | 307 | 34 | 218 |
| 19 | 203 | 58 | 30 | 324 | 92 | 222 |
| 20 | 102 | 55 | 97 | 322 | 48 | 219 |
| 21 | 295 | 60 | 11 | 219 | 60 | 200 |
| 22 | 147 | 40 | 32 | 318 | 40 | 204 |
| 23 | 244 | 84 | 68 | 233 | 32 | 205 |
| 24 | 132 | 43 | 43 | 383 | 75 | 224 |
| 25 | 121 | 48 | 87 | 382 | 10 | 221 |
| 26 | 228 | 40 | 57 | 347 | 27 | 204 |
| 27 | 230 | 47 | 55 | 388 | 54 | 207 |
| 28 | 169 | 21 | 64 | 201 | 44 | 214 |
| 29 | 228 | 27 | 90 | 363 | 67 | 202 |
| 30 | 124 | 96 | 81 | 354 | 51 | 219 |
| 31 | 156 | 23 | 75 | 237 | 20 | 212 |
| 32 | 137 | 89 | 45 | 312 | 22 | 215 |
| 33 | 114 | 65 | 74 | 313 | 53 | 222 |
| 34 | 277 | 35 | 51 | 336 | 78 | 206 |
| 35 | 153 | 59 | 99 | 286 | 89 | 223 |
| 36 | 239 | 54 | 45 | 322 | 59 | 221 |
| 37 | 277 | 66 | 30 | 341 | 11 | 212 |
| 38 | 158 | 74 | 31 | 357 | 85 | 218 |
| 39 | 182 | 61 | 39 | 241 | 21 | 203 |
| 40 | 196 | 50 | 17 | 348 | 50 | 223 |
| 41 | 214 | 64 | 38 | 356 | 64 | 210 |
| 42 | 205 | 55 | 34 | 392 | 70 | 200 |
| 43 | 220 | 90 | 10 | 369 | 84 | 200 |
| 44 | 226 | 57 | 52 | 241 | 84 | 201 |
| 45 | 214 | 24 | 20 | 296 | 54 | 209 |
| 46 | 171 | 19 | 64 | 304 | 85 | 218 |
| 47 | 277 | 89 | 52 | 340 | 75 | 212 |
| 48 | 216 | 16 | 22 | 225 | 26 | 201 |
| 49 | 216 | 49 | 89 | 392 | 52 | 213 |
| 50 | 169 | 45 | 95 | 382 | 43 | 210 |
| 51 | 199 | 74 | 11 | 280 | 46 | 211 |
| 52 | 207 | 55 | 49 | 254 | 22 | 221 |
| 53 | 182 | 76 | 40 | 210 | 99 | 218 |
| 54 | 163 | 66 | 52 | 249 | 25 | 203 |
| 55 | 139 | 72 | 26 | 356 | 20 | 205 |

(continued)

| Group No. | Weight for Position Factor | Weight for Surface Factor | Weight for Diffusion Count | Weight for Color Difference Factor | Weight for Printing Layer Factor | Binarization Threshold |
|---|---|---|---|---|---|---|
| 56 | 198 | 42 | 90 | 226 | 17 | 221 |
| 57 | 267 | 26 | 96 | 387 | 79 | 201 |
| 58 | 267 | 79 | 49 | 234 | 96 | 205 |
| 59 | 186 | 35 | 13 | 274 | 45 | 207 |
| 60 | 121 | 53 | 31 | 349 | 32 | 200 |
| 61 | 169 | 31 | 18 | 217 | 68 | 200 |
| 62 | 279 | 45 | 41 | 385 | 54 | 218 |
| 63 | 177 | 21 | 71 | 322 | 30 | 215 |
| 64 | 160 | 87 | 77 | 373 | 29 | 200 |
| 65 | 268 | 54 | 76 | 223 | 81 | 208 |
| 66 | 102 | 80 | 68 | 287 | 75 | 219 |
| 67 | 247 | 90 | 91 | 202 | 17 | 214 |
| 68 | 230 | 42 | 58 | 374 | 31 | 216 |
| 69 | 159 | 95 | 98 | 234 | 36 | 212 |
| 70 | 264 | 24 | 39 | 270 | 26 | 200 |
| 71 | 196 | 63 | 31 | 203 | 32 | 201 |
| 72 | 216 | 86 | 87 | 324 | 52 | 202 |
| 73 | 285 | 45 | 10 | 259 | 16 | 211 |
| 74 | 125 | 70 | 13 | 293 | 49 | 207 |
| 75 | 116 | 24 | 19 | 342 | 81 | 210 |
| 76 | 143 | 55 | 10 | 383 | 11 | 210 |
| 77 | 258 | 95 | 85 | 364 | 42 | 216 |
| 78 | 256 | 67 | 14 | 224 | 98 | 208 |
| 79 | 108 | 58 | 33 | 279 | 62 | 210 |
| 80 | 264 | 55 | 35 | 254 | 30 | 213 |
| 81 | 154 | 72 | 63 | 351 | 65 | 221 |
| 82 | 211 | 21 | 20 | 263 | 33 | 214 |
| 83 | 228 | 51 | 80 | 289 | 53 | 204 |
| 84 | 162 | 92 | 42 | 255 | 36 | 221 |
| 85 | 273 | 74 | 26 | 260 | 68 | 203 |
| 86 | 165 | 66 | 51 | 373 | 65 | 222 |
| 87 | 150 | 34 | 46 | 292 | 85 | 213 |
| 88 | 216 | 20 | 43 | 270 | 98 | 209 |
| 89 | 205 | 88 | 68 | 242 | 26 | 208 |
| 90 | 243 | 71 | 45 | 292 | 43 | 204 |
| 92 | 181 | 75 | 56 | 339 | 20 | 211 |
| 93 | 210 | 67 | 37 | 371 | 89 | 212 |
| 94 | 169 | 86 | 69 | 385 | 44 | 217 |

(continued)

| Group No. | Weight for Position Factor | Weight for Surface Factor | Weight for Diffusion Count | Weight for Color Difference Factor | Weight for Printing Layer Factor | Binarization Threshold |
|---|---|---|---|---|---|---|
| 95 | 196 | 36 | 13 | 239 | 46 | 207 |
| 96 | 121 | 70 | 70 | 386 | 41 | 204 |
| 97 | 118 | 31 | 54 | 249 | 85 | 202 |
| 98 | 100 | 58 | 64 | 205 | 29 | 203 |
| 99 | 168 | 34 | 63 | 304 | 21 | 219 |
| 100 | 217 | 81 | 55 | 262 | 50 | 215 |

1.2.2 For each group of weights, corresponding print data is calculated using a 3D error diffusion method, and the color difference is calculated using a standard color difference formula such as CIE76/2000. If the population size is 100, 100 groups of color difference data is able to be obtained.

12.3 The groups are sorted by color difference, and weight groups with smaller color differences are selected as new weight groups. For example, the top 50 groups are selected.

12.4 Crossover and mutation are performed on the 50 groups of weights obtained in the previous step. Pairwise crossover is performed randomly based on the crossover probability, and one or more weights are randomly changed based on the mutation probability such that 50 new groups of weights are able to be obtained.

As described in Table 2, for example, Group No. 1 and Group No. 18 are randomly selected for crossover.

Table 2

| Group No. | Weight for Position Factor | Weight for Surface Factor | Weight for Diffusion Count | Weight for Color Difference Factor | Weight for Printing Layer Factor | Binarization Threshold |
|---|---|---|---|---|---|---|
| 1 | 173 | 32 | 31 | 267 | 17 | 210 |
| 18 | 283 | 66 | 18 | 359 | 97 | 212 |

As described in Table 3, the weight group obtained after crossover is as follows.

Table 3

| Weight for Position Factor | Weight for Surface Factor | Weight for Diffusion Count | Weight for Color Difference Factor | Weight for Printing Layer | Binarization Threshold |
|---|---|---|---|---|---|
| 283 | 66 | 18 | 267 | 17 | 210 |

As described in Table 4, the weight group obtained after mutation is as follows.

Table 4

| Weight for Position Factor | Weight for Surface Factor | Weight for Diffusion Count | Weight for Color Difference Factor | Weight for Printing Layer Factor | Binarization Threshold |
|---|---|---|---|---|---|
| 283 | 66 | 90 | 267 | 17 | 210 |

12.4 Step 1.2.2 is returned to re-loop until the number of iterations exceeds a set value, and then the loop stops.

1.2.4 The optimal weight group and the optimal binarization threshold corresponding to the grayscale are obtained. The preceding process is repeated for each grayscale value or repeated for part of grayscale values, and the remaining grayscale values are calculated through linear interpolation or other methods.

By setting the number of genetic iterations to 10, the crossover probability to 0.5, and the mutation probability to 0.2, the optimal weight and the optimal binarization threshold can be obtained, as described in Table 5.

Table 5

| Weight for Position Factor | Weight for Surface Factor | Weight for Diffusion Count | Weight for Color Difference Factor | Weight for Printing Layer Factor | Binarizatio n Threshold |
|---|---|---|---|---|---|
| 235 | 60 | 55 | 313 | 17 | 214 |

2. 3D Error Diffusion

2.1 Color channel selection: For each voxel, the color values are CMYK. In generating print data, since one channel in three-dimensional printing corresponds to one color or filling material (such as transparent ink or support material), only one channel jets a certain amount of ink at each voxel. Therefore, one channel is selected for binarization-based halftoning, that is, the CMYK data is converted into print data indicating whether to jet ink for each corresponding print head. The CMYK values of color channel data are sorted in descending order, and the selection is performed as follows.

When only one maximum value exists among the CMYK values, the channel corresponding to the maximum value is selected. For example, if only the C value exceeds the threshold in CMYK, cyan C is jetted at the voxel.

When multiple identical maximum values exist, one channel corresponding to one of the identical maximum values that exceeds the set threshold is randomly selected.

2.2 Binarization: The optimal binarization threshold is obtained according to the grayscale value of the selected channel, the grayscale value of the selected channel is compared with the optimal binarization threshold, and when the grayscale value of the selected channel is greater than the optimal binarization threshold, the channel is set for jetting a corresponding color, or otherwise, the channel is set for jetting filling material.

2.3 Error Calculation: In a case where the current voxel is determined for jetting color, the error $\Delta Color = COLOR - 255$, where COLOR is the grayscale value of the voxel in the channel, and the errors $\Delta Color$ for the other channels are represented as: $\Delta Color = COLOR$, where COLOR is the grayscale value of the voxel in the other channels. For example, in CMYK (245, 200, 120, 20), the channel with the maximum grayscale value is channel C, and the grayscale value of channel C is 245, and the grayscale value of channel C is greater than the binarization threshold 220, so the current voxel is determined for jetting C. The error $\Delta C$ for channel C is represented as: $\Delta C = 245 - 255 = -10$, error $\Delta M$ for channel M is represented as: $\Delta M = 200$, error $\Delta Y$ for channel Y is represented as: $\Delta Y = 120$, and error $\Delta K$ for channel K is represented as: $\Delta K = 20$. In a case where the current voxel is a filling voxel, the error is the grayscale value of the voxel in the channel. For example, in CMYK (100, 130, 120, 20), the channel with the maximum grayscale value is channel M, and the grayscale value of channel M is 130, and the grayscale value of channel M is less than the binarization threshold 220, so the current voxel is a filling voxel, and its errors are as follows: $\Delta C = 100$, $\Delta M = 130$, $\Delta Y = 120$, and $\Delta K = 20$.

2.4 3D diffusion: For the unprocessed adjacent voxels $V_i$ in the upper and lower layers of the current voxel, a diffusion coefficient $f_i$ is separately calculated, where $f_i = W_i / \Sigma W_i$, and $W_i$ is the sum of products of each diffusion factor and the corresponding optimal weight. $W_i$ = posFactor*posFactorW + disFactor*disFactorW + errorFactor*errorFactorW + layerFactor*layerFactorW + colorFactor*colorFactorW. posFactor refers to a factor value of the voxel position factor, and posFactorW refers to an optimal weight for the voxel position factor. disFactor refers to a factor value of the surface voxel factor, and disFactorW refers to an optimal weight for the surface voxel factor. errorFactor refers to a factor value of the error count factor, and errorFactorW refers to an optimal weight for the error count factor. layerFactor refers to a factor value of the printing layer position factor, and layerFactorW refers to an optimal weight for the printing layer position factor. colorFactor refers to a factor value of the color difference factor, and colorFactorW refers to an optimal weight for the color difference factor.

For each $V_i$, error values are separately added to CMYK colors of $V_i$ as follows: $C = C + \Delta C \times f_i$, $M = M + \Delta M \times f_i$, $Y = Y + \Delta Y \times f_i$, and $K = K + \Delta K \times f_i$.

2.5 Diffusion path: After the error values are added to the adjacent voxel, color channel selection is performed on the voxel, diffusion is carried out according to different diffusion paths, and the preceding operations are repeated until binarization is completed for all voxels. The diffusion path refers to common scanning paths in 2D error diffusion, such as zigzag and serpentine. During 3D diffusion, different scanning paths are also adopted for each layer. For example, a first layer is from left to right and top to bottom, and a second layer is from right to left and bottom to top, so as to avoid common diffusion defects.

Embodiment one

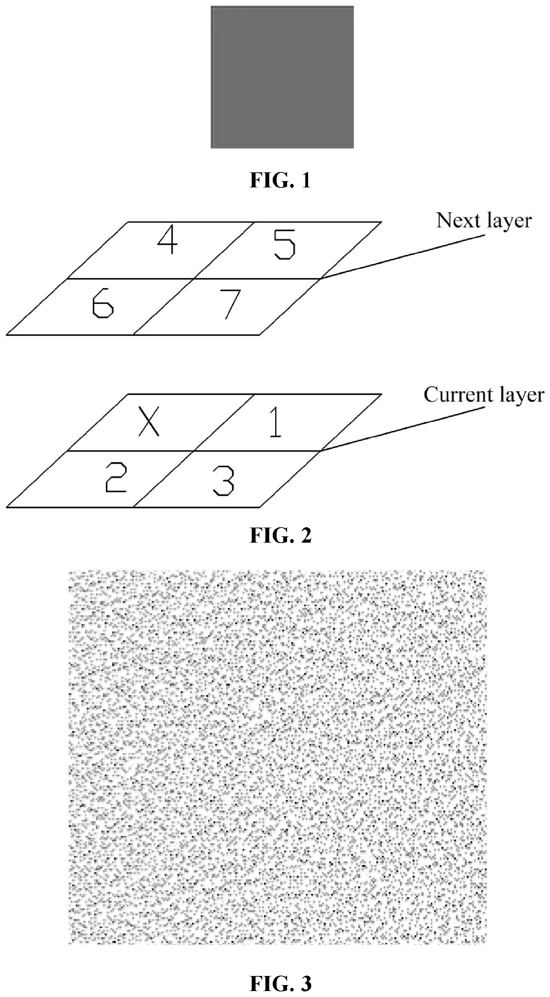

The monochromatic image in FIG. 1 is used as an example, with RGB values of (0, 160, 233). Through a color separation algorithm, CMYK values (112, 16, 21, 200) are obtained. As shown in FIG. 2, diffusion is performed using voxel X (112, 16, 21, 200) as an example, where labels 1, 2, and 3 denote adjacent voxels in the current layer of voxel X, and labels 4, 5, 6, and 7 denote adjacent voxels in the next layer. The maximum channel is channel K, and grayscale value of channel K is 200. As previously described, the optimal weights for each factor and the optimal binarization threshold for grayscale value 200 are calculated using the genetic iterative algorithm, and the weight values corresponding to 200 are obtained, as described in Table 6.

Table 6

| Weight for Position Factor | Weight for Surface Factor | Weight for Diffusion Count | Weight for Color Difference Factor | Weight for Printing Layer Factor | Binarization Threshold |
|---|---|---|---|---|---|
| 311 | 60 | 99 | 100 | 92 | 142 |

Threshold comparison: the grayscale value of the maximum channel is greater than threshold 142. The value of the current voxel is set to correspond to K, that is, black (K) is jetted.

Errors for each channel are calculated as follows: $\Delta K = 200 - 255 = -55$, $\Delta C = 112$, $\Delta M = 16$, and $\Delta Y = 21$.

Diffusion coefficients for adjacent voxels are calculated. By searching, the number of adjacent voxels is obtained as 7.

According to the optimal weights and factor values, diffusion coefficients are calculated. For each adjacent voxel, a diffusion weight $W_i$ is obtained according to the product of position factors and weights.

$W_i$ = posFactor*posFactorW + disFactor*disFactorW + errFactor*errFactorW + layerFactor*layerFactorW + colorFactor*colorFactorW.

The adjacent voxel labeled 1 is used as an example, where posFactor = 1.0, disFactor = 0.15, errorFactor = 0.1, layerFactor = 0.6, and colorFactor = 0.129.

$$W_1 = 1.0*311 + 0.15*60 + 0.1*99 + 0.6*92 + 0.129*100 = 398.$$

The weight values for the first-layer adjacent voxels are calculated as follows: $W_1 = 398$, $W_2 = 551$, and $W_3 = 339$.

The weight values for the second-layer adjacent voxels are as follows: $W_4 = 299$, $W_5 = 392$, $W_6 = 234$, and $W_7 = 392$.

According to the formula that $f_i = W_i / \Sigma W_i$, the diffusion coefficient values are calculated as follows: $f_1 = 0.15$, $f_2 = 0.21$, $f_3 = 0.13$, $f_4 = 0.114$, $f_5 = 0.150$, $f_6 = 0.09$, and $f_7 = 0.150$.

According to the preceding diffusion coefficients and error values, the error is diffused to the 7 adjacent voxels in the current layer and the next layer.

For example, the calculation of the C-value error for the three voxels in the first layer is as follows.

$$P1c = 112 + 0.15*\Delta C = 129.$$

$$P2c = 112 + 0.21*\Delta C = 135.$$

$$P3c = 112 + 0.13*\Delta C = 126.$$

The same operation is performed for each channel of all adjacent voxels. After the error values are added to the CMYK values of the 7 voxels, color channel selection is performed again on each voxel, and the preceding operations are repeated until binarization is completed for all voxels. The result after diffusion of the image in FIG. 1 is shown in FIG. 3.

Embodiment two

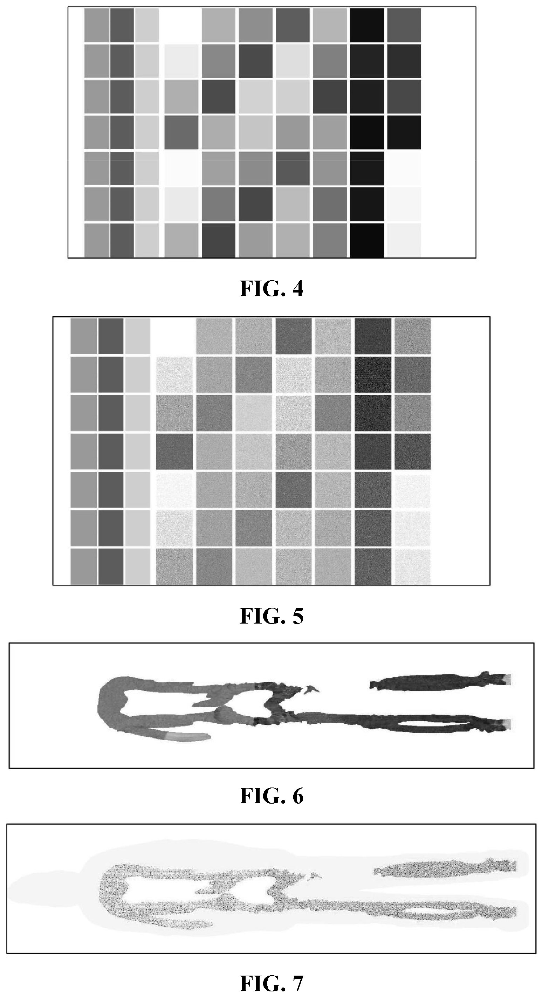

A color image is shown in FIG. 4, and the image after diffusion according to the diffusion method is shown in FIG. 5.

Embodiment three

A color image is shown in FIG. 6, and the image after diffusion according to the diffusion method is shown in FIG.

7.

The above are only specific embodiments of the present invention, but the technical features of the present invention are not limited thereto. Any simple changes, equivalent replacements, or modifications made based on the present invention to solve substantially the same technical problems and achieve substantially the same technical effects fall within the scope of the present invention.

**Claims**

1. An error diffusion method for full-color 3D printing, comprising:

   selecting a corresponding diffusion factor for each grayscale value or part of grayscale values;
   calculating, through a genetic iterative algorithm and according to a principle of minimum color difference, an optimal weight value corresponding to the diffusion factor for each grayscale value or each of the part of the grayscale values and an optimal binarization threshold corresponding to the diffusion factor for each grayscale value or each of the part of the grayscale values;
   selecting one channel for each voxel, and comparing a grayscale value of the selected channel with a corresponding optimal binarization threshold to perform binarization-based halftoning;
   calculating a diffusion coefficient according to the corresponding diffusion factor and the optimal weight value; and
   diffusing an error to unprocessed adjacent voxels in a current layer and a next layer of a current voxel.

2. The error diffusion method for full-color 3D printing according to claim 1, wherein the diffusion factor comprises a voxel position factor, a surface voxel factor, an error count factor, a color difference factor, and a printing layer position factor, and a factor value of each of the voxel position factor, the surface voxel factor, the error count factor, the color difference factor, and the printing layer position factor is in a range of [0, 1].

3. The error diffusion method for full-color 3D printing according to claim 2, wherein a method for determining the factor value of the voxel position factor comprises:
   determining the voxel position factor based on eight surrounding voxels in a current layer where a voxel is located and nine voxels in a next layer corresponding to the voxel, wherein a surrounding voxel closer to the voxel has a greater value of the voxel position factor.

4. The error diffusion method for full-color 3D printing according to claim 2, wherein a method for determining the factor value of the surface voxel factor comprises:

   determining a voxel being a surface voxel with a surface distance of 0 in response one of four adjacent voxels in up, down, left, and right directions of the voxel being empty;
   regarding a non-surface valid voxel adjacent to the surface voxels as an internal voxel;
   performing a breadth-first search with the surface voxel as a seed to obtain first-level internal voxels with a surface distance of 1;
   repeating a step of performing the breadth-first search with the first-level internal voxels as seeds to obtain second-level internal voxels with a surface distance of 2, iteratively until all voxels are searched or a maximum surface distance is reached; and
   determining, according to an absolute value of a difference in surface distance between the current voxel and an adjacent voxel, the factor value of the surface voxel factor in the current layer to be smaller with a greater absolute value; wherein the factor value of the surface voxel factor in the next layer is less than the factor value of the surface voxel factor in the current layer.

5. The error diffusion method for full-color 3D printing according to claim 2, wherein a method for determining the factor value of the error count factor comprises:
   counting a number of diffusions when a voxel is subjected to multiple diffusions, wherein the factor value of the error count factor decreases as the number of diffusions increases.

6. The error diffusion method for full-color 3D printing according to claim 2, wherein a method for determining the factor value of the color difference factor comprises:

   determining the factor value of the color difference factor to be greater for an adjacent voxel that receives diffusion and has a smaller color difference from the current voxel during diffusion;

determining the factor value of the color difference factor to be smaller for the adjacent voxel that receives diffusion and has a greater color difference from the current voxel; and

calculating the factor value of the color difference factor as (255 -|ΔColor|)/255, wherein ΔColor is a color difference of each channel.

7. The error diffusion method for full-color 3D printing according to claim 2, wherein a method for determining the printing layer position factor comprises:

setting different degrees of receiving diffusion for the current layer and the next layer, wherein the printing layer position factor of the current layer is greater than the printing layer position factor of the next layer.

8. The error diffusion method for full-color 3D printing according to claim 2, wherein a method for determining the binarization threshold comprises:

performing binarization processing on colors during a diffusion process to convert the colors into print head data;

setting different binarization thresholds for different color grayscales to produce different effects; and

setting a binarization threshold of the binarization thresholds as 220 + Rnd(-20 to 20), wherein Rnd represents a random value, and the binarization threshold is a random value between 200 and 240.

9. The error diffusion method for full-color 3D printing according to claim 1, wherein the genetic iterative algorithm comprises:

initializing all populations and randomly setting, for each grayscale value or each of the part of the grayscale value, a weight value of the diffusion factor and a binarization threshold of the diffusion factor;

calculating corresponding print data using a 3D error diffusion method and calculating a color difference using a standard color difference formula;

storing a solution with a smaller color difference as a better solution according to the color difference;

performing random crossover and exchange on weights and binarization thresholds of different factors;

randomly changing one or several weights or binarization thresholds of the different factors; and

increasing a number of iterations and repeating the following steps until a preset number of iterations is reached to obtain the optimal weight value and the optimal binarization threshold: calculating the corresponding print data using the 3D error diffusion method and calculating the color difference using the standard color difference formula, storing the solution with the smaller color difference as the better solution according to the color difference, performing random crossover and exchange on weights and the binarization thresholds of the different factors, and randomly changing one or several weights or binarization thresholds of the different factors.

10. The error diffusion method for full-color 3D printing according to claim 1, wherein selecting the one channel for each voxel comprises:

for each voxel having CMYK color values, sorting the CMYK values of color channel data in descending order;

in response to only one maximum value existing among the CMYK values, selecting a channel corresponding to the maximum value; and

in response to a plurality of identical maximum values existing among the CMYK values, randomly selecting a channel corresponding to one of the identical maximum values.

11. The error diffusion method for full-color 3D printing according to claim 1, wherein comparing the grayscale value of the selected channel with the corresponding optimal binarization threshold to perform binarization-based halftoning comprises:

obtaining the optimal binarization threshold according to the grayscale value of the selected channel;

comparing the grayscale value of the selected channel with the optimal binarization threshold; and

in response to the grayscale value of the selected channel being greater than the optimal binarization threshold, setting the channel for jetting a corresponding color, and in response to the grayscale value of the selected channel not being greater than the optimal binarization threshold, setting the channel for jetting filling material.

12. The error diffusion method for full-color 3D printing according to claim 1, wherein calculating the diffusion coefficient according to the corresponding diffusion factor and the optimal weight value comprises:

calculating, for each of the unprocessed adjacent voxels $V_i$ in the current layer and the next layer of the current voxel, a respective diffusion coefficient $f_i$, wherein $f_i = W_i / \Sigma W_i$, and $W_i$ is a sum of products of each diffusion factor and the corresponding optimal weight value.

13. The error diffusion method for full-color 3D printing according to claim 12, wherein diffusing the error to the unprocessed adjacent voxels in the current layer and the next layer of the current voxel comprises:

in response to the current voxel being determined for jetting color, setting the error as a grayscale value of the voxel in a channel minus 255, and setting errors for other channels as grayscale values of voxels in other channels;

in response to the current voxel being determined for jetting filling material, setting the error as the grayscale value of the voxel in the channel;

adding an error value to each of CMYK colors for each of the unprocessed adjacent voxels $V_i$ as follows: $C' = C + \Delta C \times f_i$, $M' = M + \Delta M \times f_i$, $Y' = Y + \Delta Y \times f_i$, and $K' = K + \Delta K \times f_i$, wherein $C'$ is a grayscale value of channel C after adding the error value, C is a current grayscale value of channel C, $\Delta C$ is an error of channel C, $M'$ is a grayscale value of channel M after adding the error value, M is a current grayscale value of channel M, $\Delta M$ is an error of channel M, $Y'$ is a grayscale value of channel Y after adding the error value, Y is a current grayscale value of channel Y, $\Delta Y$ is an error of channel Y, $K'$ is a grayscale value of channel K after adding the error value, K is a current grayscale value of channel K, and $\Delta K$ is an error of channel K; and

performing color channel selection on the current voxel after adding the error value to each of the unprocessed adjacent voxels, diffusing the error according to different diffusion paths, and returning to perform the step of in response to the current voxel being determined for jetting color, setting the error as a grayscale value of the voxel in a channel minus 255, and setting errors for other channels as grayscale values of voxels in other channels, until binarization is completed for all voxels.

14. The error diffusion method for full-color 3D printing according to claim 9, wherein the 3D error diffusion method comprises:

color channel selection: for each voxel having CMYK color values, sorting the CMYK values of color channel data in descending order, and performing the following method: in response to only one maximum value existing among the CMYK values, selecting a channel corresponding to the maximum value, and in response to a plurality of identical maximum values existing among the CMYK values, randomly selecting a channel corresponding to one of the identical maximum values;

binarization: obtaining the optimal binarization threshold according to the grayscale value of the selected channel, comparing the grayscale value of the selected channel with the optimal binarization threshold, in response to the grayscale value of the selected channel being greater than the optimal binarization threshold, setting the channel for jetting a corresponding color, and in response to the grayscale value of the selected channel not being greater than the optimal binarization threshold, setting the channel for jetting filling material;

error calculation: in response to the current voxel being determined for jetting color, setting the error as a grayscale value of the voxel in a channel minus 255, and setting errors for other channels as grayscale values of voxels in other channels; in response to the current voxel being determined for jetting filling material, setting the error as the grayscale value of the voxel in the channel;

3D diffusion: calculating, for each of the unprocessed adjacent voxels $V_i$ in the current layer and the next layer of the current voxel, a respective diffusion coefficient $f_i$, wherein $f_i = W_i / \Sigma W_i$, and $W_i$ is a sum of products of each diffusion factor and the corresponding optimal weight, adding an error value to each of CMYK colors for each of the unprocessed adjacent voxels $V_i$ as follows: $C' = C + \Delta C \times f_i$, $M' = M + \Delta M \times f_i$, $Y' = Y + \Delta Y \times f_i$, and $K' = K + \Delta K \times f_i$, wherein $C'$ is a grayscale value of channel C after adding the error value, C is a current grayscale value of channel C, $\Delta C$ is an error of channel C, $M'$ is a grayscale value of channel M after adding the error value, M is a current grayscale value of channel M, $\Delta M$ is an error of channel M, $Y'$ is a grayscale value of channel Y after adding the error value, Y is a current grayscale value of channel Y, $\Delta Y$ is an error of channel Y, $K'$ is a grayscale value of channel K after adding the error value, K is a current grayscale value of channel K, and $\Delta K$ is an error of channel K; and

diffusion path: performing color channel selection on the current voxel after adding the error value to each of the unprocessed adjacent voxels, diffusing the error according to different diffusion paths, and returning to perform the step of the color channel selection until binarization is completed for all voxels.

EP 4 772 330 A1

**FIG. 1**

Next layer

Current layer

**FIG. 2**

**FIG. 3**

**FIG. 4**

**FIG. 5**

**FIG. 6**

**FIG. 7**

## INTERNATIONAL SEARCH REPORT

| | International application No. |
|---|---|
| | **PCT/CN2024/140660** |

| A. | CLASSIFICATION OF SUBJECT MATTER |
|---|---|

B29C64/112(2017.01)i

According to International Patent Classification (IPC) or to both national classification and IPC

| B. | FIELDS SEARCHED |
|---|---|

Minimum documentation searched (classification system followed by classification symbols)

IPC: B29C、G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 三维, 3D, 打印, 扩散, 权重, 二值化, 阈值, 最优, 最佳, 遗传算法, 体素, 误差, three-dimensional, print, diffuse, weight, binarization, threshold, optimal, genetic algorithm, voxel, error

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2006303999 A (CANON K.K.) 02 November 2006 (2006-11-02) description, paragraphs 0015-0115 | 1-14 |
| A | CN 108381905 A (BEIJING INSTITUTE OF GRAPHIC COMMUNICATION) 10 August 2018 (2018-08-10) entire document | 1-14 |
| A | CN 114434804 A (HANGZHOU DIANZI UNIVERSITY) 06 May 2022 (2022-05-06) entire document | 1-14 |
| A | CN 115157654 A (HEBEI UNIVERSITY OF TECHNOLOGY et al.) 11 October 2022 (2022-10-11) entire document | 1-14 |
| A | US 2005007635 A1 (KANG Ki-min et al.) 13 January 2005 (2005-01-13) entire document | 1-14 |
| A | US 2015256714 A1 (SEIKO EPSON CORP.) 10 September 2015 (2015-09-10) entire document | 1-14 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 February 2025** | **07 March 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/140660**

| Patent document cited in search report | | | Publication date (day/month/year) | Patent family member(s) | | | Publication date (day/month/year) |
|---|---|---|---|---|---|---|---|
| JP | 2006303999 | A | 02 November 2006 | None | | | |
| CN | 108381905 | A | 10 August 2018 | None | | | |
| CN | 114434804 | A | 06 May 2022 | None | | | |
| CN | 115157654 | A | 11 October 2022 | None | | | |
| US | 2005007635 | A1 | 13 January 2005 | KR | 20050006491 | A | 17 January 2005 |
| US | 2015256714 | A1 | 10 September 2015 | JP | 2015167306 | A | 24 September 2015 |

Form PCT/ISA/210 (patent family annex) (July 2022)